(19) **Europäisches Patentamt / European Patent Office / Office européen des brevets**

(11) **EP 4 616 991 A1**

(12) **EUROPEAN PATENT APPLICATION**
published in accordance with Art. 153(4) EPC

(43) Date of publication:
**17.09.2025 Bulletin 2025/38**

(21) Application number: **24747314.3**

(22) Date of filing: **23.01.2024**

(51) International Patent Classification (IPC):
**B23K 26/356** (2014.01)   **B23K 15/00** (2006.01)
**C21D 8/12** (2006.01)

(52) Cooperative Patent Classification (CPC):
**B23K 15/00; B23K 26/356; C21D 8/12**

(86) International application number:
**PCT/JP2024/001912**

(87) International publication number:
**WO 2024/157987 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.01.2023 JP 2023009028**

(71) Applicant: **JFE Steel Corporation
Tokyo 100-0011 (JP)**

(72) Inventors:
• **ICHIHARA, Yoshihisa
  Tokyo 100-0011 (JP)**
• **OMURA, Takeshi
  Tokyo 100-0011 (JP)**
• **INOUE, Hirotaka
  Tokyo 100-0011 (JP)**
• **NAKAMURA, Koji
  Tokyo 100-0011 (JP)**

(74) Representative: **Hoffmann Eitle
Patent- und Rechtsanwälte PartmbB
Arabellastraße 30
81925 München (DE)**

(54) **SURFACE PROCESSING METHOD FOR METAL MATERIAL, SURFACE PROCESSING METHOD FOR METAL SHEET, AND PRODUCTION METHOD FOR GRAIN-ORIENTED ELECTROMAGNETIC STEEL SHEET**

(57)    Provided is a means to suppress a decrease in the amount of thermal strain when production line speed is increased, and to both improve production efficiency and stabilize an iron loss improvement effect during operation. The means is a method of surface processing a metal material or a metal sheet including irradiating the surface of the metal material or the metal sheet with an energy beam under at least two focus settings.

*FIG. 2*

EP 4 616 991 A1

**Description**

TECHNICAL FIELD

The present disclosure relates to a method of surface processing of metal material, a method of surface processing of a metal sheet, and a method of producing a grain-oriented electrical steel sheet, in which energy beam irradiation is carried out.

BACKGROUND

Surface processing of metal materials and metal sheets by energy beam irradiation is used for various applications such as hardening, printing, lithography, and thermal strain introduction. In particular, in the field of grain-oriented electrical steel sheet technology, energy beam irradiation is used for non-heat-resistant magnetic domain refining, which is a technology to significantly improve (decrease) the iron loss of a grain-oriented electrical steel sheet by introducing thermal strain by irradiating the electrical steel sheet after secondary recrystallization with a high-energy beam such as a laser, electron beam, or plasma flame.

The iron loss of grain-oriented electrical steel sheets is mainly composed of hysteresis loss and eddy current loss. Of these, magnetic domain refining is used as a method to decrease eddy current loss. In magnetic domain refining, iron loss, in particular eddy current loss, of grain-oriented electrical steel sheets is decreased by physically introducing non-uniformity of magnetic flux into the steel sheets after final annealing or baking of insulating coating by forming grooves or introducing local strain to refine the width of 180° magnetic domains (main magnetic domains) formed along the rolling direction.

For example, in Patent Literature (PTL) 1, a technology is proposed to decrease iron loss that is 0.80 W/kg or more to 0.70 W/kg or less by introducing linear grooves of 300 $\mu$m or less in width and 100 $\mu$m or less in depth on a steel sheet surface. Further, in PTL 2, a method is proposed to decrease the iron loss ($W_{17/50}$), with a maximum magnetic flux density of 1.7 T when excited at a frequency of 50 Hz, to 0.680 W/kg for a steel sheet that has a magnetic flux density ($B_8$) of 1.935 T when excited with a magnetizing force of 800 A/m, by irradiation with a plasma flame that introduces local thermal strain in the sheet transverse direction of the steel sheet surface after secondary recrystallization.

The method of introducing linear grooves as described in PTL 1 is called heat-resistant magnetic domain refining, because the magnetic domain refining effect is not lost even after carrying out stress relief annealing after iron core formation. On the other hand, the method of introducing thermal strain as described in PTL 2 is referred to as non-heat-resistant magnetic domain refining, because stress relief annealing makes the effect of introduced thermal strain unobtainable.

It is known that the energy efficiency of a transformer is greatly affected by the iron loss of the grain-oriented electrical steel sheet used as the iron core. In recent years, from the viewpoints of energy conservation and environmental regulations, the trend toward tighter efficiency regulations for transformers has continued worldwide, and there is a strong demand to decrease energy loss in transformers. As a result, the demand for low iron loss grain-oriented electrical steel sheets has been on the rise in recent years. Accordingly, the development of iron loss improvement technology for grain-oriented electrical steel sheets by non-heat-resistant magnetic domain refining has become extremely important. For example, there is a demand for development of technology to improve the efficiency of non-heat resistant magnetic domain refining treatment in the production lines of grain-oriented electrical steel sheets.

CITATION LIST

Patent Literature

**[0007]**

　　PTL 1: JP H06-22179 B2
　　PTL 2: JP H07-192891 A

SUMMARY

(Technical Problem)

One means of increasing the throughput of non-heat-resistant magnetic domain refining of grain-oriented electrical steel sheets is to increase the speed of a production line. However, the problem was that as the speed of the production line was increased, the amount of thermal strain introduced into the steel sheets gradually decreased, and the effect of decreasing iron loss due to magnetic domain refining gradually decreased. When the output power of an energy beam is increased in order to solve this problem, new problems arise: for lasers, the risk of equipment failure increases due to the increased thermal effect on the optical system; for electron beams, the production cost increases due to the increased electrical power consumption. Accordingly, there is a need to develop a different method than simply increasing heat input.

In view of the circumstances described above, it would be helpful to suppress a decrease in the amount of thermal strain introduced when a production line speed is increased, thereby both improving production efficiency and stabilizing an iron loss improvement effect during operation.

(Solution to Problem)

The inventors conducted extensive studies into solutions to address the problem described above.

First, the inventors investigated causes of the decrease in thermal strain introduction when production line speed is increased (hereinafter also referred to as "high-speed operation"). As a result, the inventors found that appropriate focus conditions for the energy beam change significantly during high-speed operation when compared to off-line operation and low-speed operation. Here, off-line operation refers to an operation in which beam focus is adjusted while the production line is stopped, and test processing is performed under a focus setting value thereby obtained. Further, low-speed operation refers to operation at a production line speed at which no property degradation occurs when operating at the focus setting value obtained by off-line adjustment.

Although detailed reasons for the significant changes in the focus conditions described above have not been determined, the inventors speculate as follows.

For example, the process of applying non-heat-resistant magnetic domain refining to a grain-oriented electrical steel sheet (hereinafter also referred to simply as a steel sheet) involves scanning an energy beam in a direction intersecting the sheet passing direction (steel sheet rolling direction) on a production line as the steel sheet passes through the line, thereby introducing linear thermal strain in that direction. After this energy beam scan, the energy beam scan is stopped outside the production line and placed in standby. Once the steel sheet has been transported a defined distance, the beam in standby is scanned again in the direction described above to introduce thermal strain. By repeating the above operations, a large number of equally spaced thermal strain portions are introduced at intervals along the sheet passing direction to subdivide magnetic domains.

In the magnetic domain refining treatment described above, when irradiating a steel sheet with an energy beam, the energy beam repeatedly switches between irradiating and standby (stop), but when the production line speed is increased, the stop time after beam irradiation is decreased. When an electron beam is used as the energy beam, the magnetic field is scanned by the electron beam, and therefore the next irradiation is carried out before the residual magnetic field generated in the coil that controls the beam deflection is relaxed. This would generate a composite magnetic field in which the residual field is superimposed on the magnetic field applied for beam scanning, which would result in a change in the focus of the electron gun.

On the other hand, when a laser is used as the energy beam, the laser is scanned using polyhedral mirrors, and therefore the increase in production line speed decreases the time in which the laser is not hitting each surface of the polyhedral mirrors. In other words, the laser hits each surface of the mirrors for a longer period of time, and the mirror surfaces are slightly deformed due to the heating caused by the laser at this time, which is presumed to result in focus change.

Based on the above discoveries, the inventors conducted further studies and found that it is particularly effective to carry out energy beam irradiation under focus setting values that are appropriate for high-speed operation. That is, instead of fixing the focus setting value for energy beam irradiation to a single initial value set off-line as conventionally, the inventors have discovered that by using with one or more focus setting values that are set according to the production line speed, and thereby, carrying out the irradiation under a total of at least two focus setting values, it is possible to suppress the decrease in the amount of thermal strain introduced that accompanies an increase in the production line speed.

Here, focus setting means measuring the profile of the energy beam using techniques such as a slit, knife edge, or pinhole, and adjusting a beam convergence system so that the obtained energy profile (energy intensity and spot diameter) has the desired shape. Further, the focus setting conditions thus determined are hereinafter also referred to as the "focus setting values".

The present disclosure is based on the discoveries described above. We thus provide:

1. A method of surface processing a metal material comprising: irradiating a surface of the metal material with an energy beam under at least two focus setting values.

2. The method of surface processing a metal material according to 1 above, wherein at least one of the focus setting values is changed in accordance with a change in a processing interval time $\tau 1 = 1/fp - Ls/Ve$, determined from a scan speed $Ve$, a scan range $Ls$, and a number of irradiations per unit time $fp$ of the energy beam.

3. The method of surface processing a metal material according to 1 or 2 above, wherein the metal material is a grain-oriented electrical steel sheet.

4. A method of producing a grain-oriented electrical steel sheet, comprising: irradiating a surface of the grain-oriented electrical steel sheet in a direction intersecting the rolling direction with the energy beam a plurality of times by the method of surface processing metal material according to 3 above, to introduce one or both of a plurality of heat-affected zones and a plurality of thermal strain zones into the surface of the grain-oriented electrical steel sheet.

5. A method of surface processing a metal sheet, comprising: periodically scanning an energy beam on a surface of the metal sheet passing through a production line, in a direction intersecting the sheet passing direction to introduce one or both of a plurality of heat-affected zones and a plurality of thermal strain zones parallel to each other at an interval Lp in the sheet passing direction into the surface, wherein
irradiating with the energy beam is carried out under at least two focus setting values.

6. The method of surface processing a metal sheet according to 5, above, wherein at least one of the focus setting values is changed in accordance with a change in a processing interval time $\tau 2 = Lp/Vl - Ls/Ve$, determined from a production line speed Vl, the interval Lp, and a scan speed Ve and a scan range Ls of the energy beam.

7. The method of surface processing a metal sheet according to 5 or 6, above, wherein the metal sheet is a grain-oriented electrical steel sheet.

8. The method of surface processing a metal sheet according to 6 or 7, above, wherein the irradiating with the energy beam is repeated at the processing interval time $\tau 2$ under operating conditions, and a convergence system of the energy beam is adjusted to a condition that the focus setting value of the energy beam is optimal where a steady state is reached.

(Advantageous Effect)

According to the present disclosure, a decrease in the amount of thermal strain introduced when increasing production line speed can be suppressed, thereby both improving production efficiency and stabilizing an iron loss improvement effect during operation.

BRIEF DESCRIPTION OF THE DRAWINGS

In the accompanying drawings:

FIG. 1 is a diagram illustrating the concept of sheet passing speed;
FIG. 2 is a diagram illustrating a relationship between processing interval time $\tau 2$ and iron loss;
FIG. 3 is a graph illustrating a relationship between the processing interval time $\tau 2$ and noise;
FIG. 4 is a diagram illustrating focus setting in off-line adjustment;
FIG. 5 is a diagram illustrating focus setting in a repeated scan-standby pattern;
FIG. 6 is a diagram illustrating a procedure for evaluating resist stripping status; and
FIG. 7 is a diagram illustrating a procedure for evaluating resist stripping status.

DETAILED DESCRIPTION

The following is a description of the experimental results that led to the completion of the present disclosure.

(Experiment 1)

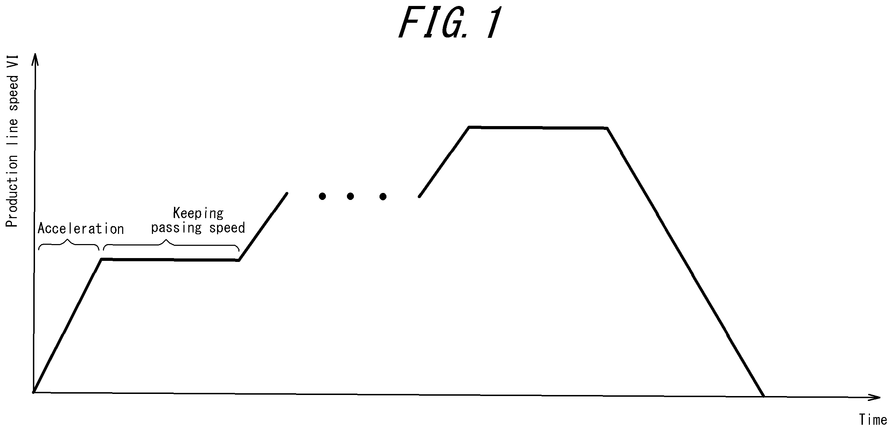

Using steel slabs that had the composition listed in Table 1, electron beam irradiation was applied to a surface of a 300 mm wide (= electron beam scan range Ls) cold-rolled steel strip produced in a typical production process for a grain-oriented electrical steel sheet, to carry out magnetic domain refining treatment. A conceptual diagram of sheet passing speed in this experiment is illustrated in FIG. 1. The "..." in FIG. 1 represents repeated acceleration and keeping of sheet passing speed. As illustrated in FIG. 1, the production line speed Vl was repeatedly accelerated at regular intervals, and the production line speed Vl was increased over six steps from 10 m/min to 140 m/min. The electron beam used had an output of 1 kW, the interval Lp of beam irradiation in the steel sheet passing direction was 9 mm, and the beam scanning speed Ve was 80 m/s. In the surface processing treatment by beam irradiation described above, the processing interval time $\tau 2$, which is the standby time after beam irradiation until the next beam irradiation, is determined by the following expression.

$$\tau 2 = Lp/Vl - Ls/Ve$$

As described above, the production line speed Vl was increased in six steps from 10 m/min to 140 m/min, and therefore the processing interval time $\tau2$ decreased over the six steps inversely proportional to the speed increase.

[Table 1]

Table 1

| Chemical composition (mass%) | | | | | | | | |
|---|---|---|---|---|---|---|---|---|
| C | Si | Mn | Ni | Al | N | Se | S | O |
| 0.08 | 3.4 | 0.1 | 0.01 | 0.0260 | 0.007 | 0.0110 | 0.003 | 0.0025 |

For the surface treatment processing described above, electron beam irradiation was carried out under the four conditions described below.

(1) A focus condition set off-line (initial focus setting value) was continuously used in all sections, regardless of production line speed.
(2) In addition to the focus condition of (1), above (initial focus setting value), beam output was changed (corrected) according to the processing interval time $\tau2$ at each section of the 6-step production line speed. The amount of output correction was set to obtain a beam output at which the intensity of the beam profile obtained by the method described below was equivalent to that set off-line, as described above.
(3) In addition to the initial focus setting value, each focus setting value that was appropriate for the processing interval time $\tau2$ was investigated in advance for each section of the six-step production line speed, and these focus setting values were weighted by the operation time of each production line speed and weighted average values were used as the focus setting values for the electron beam irradiation.
(4) In addition to the initial focus setting value, feedback control was carried out according to performance values of processing interval time during operation, and the focus setting values were optimized and irradiation was carried out according to changes in the processing interval time $\tau2$. Here, performance values of processing interval time during operation means the instant values of $\tau2$ calculated from Lp, Vl, Ls, and Ve during operation.

From the steel strips obtained by irradiation treatment according to the above conditions, angled pieces were cut for each irradiated region of each section to produce three-phase stacked iron core model transformers (iron core weight 50 kg). The iron loss properties of the model transformers were measured at a frequency of 50 Hz when the magnetic flux density in the iron core leg section was 1.7 T. The iron loss property at 1.7 T and 50 Hz was measured using a wattmeter to determine the no-load loss. At the same time, the model transformer was excited in a soundproof room at the maximum magnetic flux density Bm of 1.7 T and the frequency of 50 Hz, and the noise level (dBA) was measured using a sound level meter.

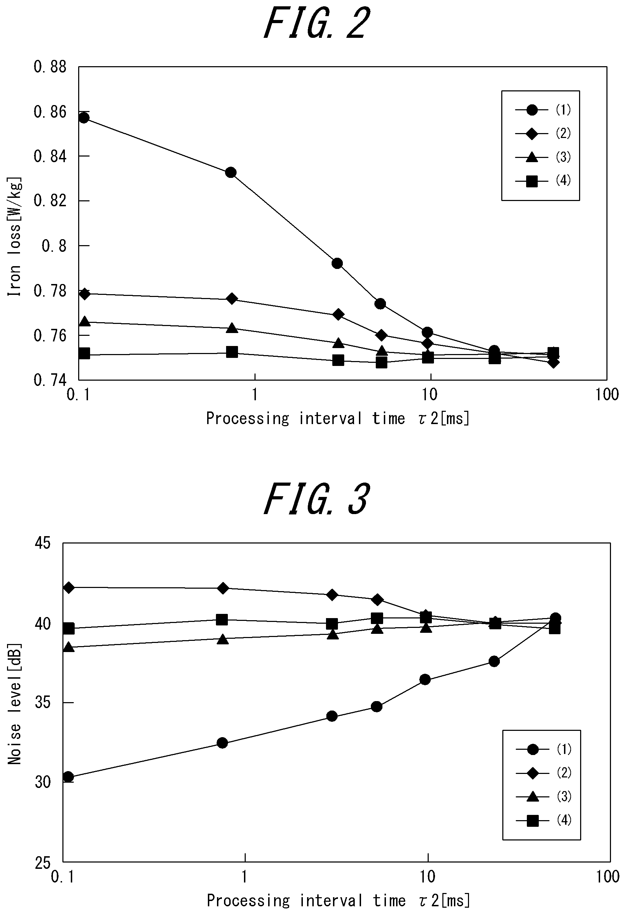

The iron loss measurement results are illustrated in FIG. 2 and the noise measurement results are illustrated FIG. 3. According to the method under condition (1), iron loss increased and noise decreased as the processing interval time $\tau2$ decreased. This may be due to the defocusing of the electron beam due to the decrease in the processing interval time $\tau2$, which decreases the amount of strain introduced. Further, the method under condition (2) tended to suppress the degradation (increase) in iron loss associated with the decrease in the processing interval time $\tau2$ compared to the method under condition (1), but noise increased. This may be because the defocusing of the electron beam due to the decrease in the processing interval time $\tau2$ was compensated for by the increase in the beam heat input, and although the strain distribution in the depth direction, which is effective for magnetic domain refining, is recovered, the total amount of introduced thermal strain increased, resulting in the noise degradation (increase).

In contrast, the methods that compensate for the focus variation itself under conditions (3) and (4) described above achieved both low iron loss and low noise even when the processing interval time $\tau2$ was decreased. In particular, it was found that the effect was greater under condition (4), in which correction was made successively in response to changes in the production line speed.

Based on the above experimental results, the inventors have extensively researched the factors that made it possible to achieve both low iron loss and low noise by using the methods under conditions (3) and (4) described above. As a result, the inventors discovered that when the production line speed is increased, instead of fixing one focus setting value for the beam (that is, continuing to use the initial focus setting value) as conventionally, it is effective to use, for example, at least one other focus setting value that depends on the processing interval time $\tau2$, for a total of at least two focus setting values, and arrived at the present disclosure.

The following is a detailed description of preferred embodiments of the present disclosure. However, the present disclosure is not limited only to the configurations according to these embodiments, and various changes can be made without departing from the spirit of the present disclosure.

<Method of surface processing of metal material>

According to the present disclosure, provided is a method of surface processing a metal material comprising irradiating a surface of the metal material with an energy beam. In the method, it is essential that the irradiating with the energy beam is carried out under at least two focus setting values that depend on the production line speed of the metal material.

For example, in a quenching process, a metal member placed on a production line operating off-line at a set speed is irradiated a plurality of times with an energy beam under a focus condition (initial focus setting value) that is set off-line to carry out heat absorption surface processing. In this surface processing, when the production line speed is increased, it is essential that the energy beam irradiate at one or more focus setting values that are different from the initial focus setting value described above. The one or more of the focus setting values that differ from the initial focus setting value may be set according to the increased production line speed, or may be set according to the processing interval time $\tau 1$ described below.

Further, at least one or more of the at least two focus setting values is preferably changed in accordance with a change in the processing interval time $\tau 1 = 1/fp - Ls/Ve$ determined from the scan speed $Ve$, the scan range $Ls$, and the number of irradiations per unit time $fp$ of the energy beam. That is, the focus setting is preferably changed according to the interval time between beam irradiations (processing interval time $\tau 1$), not the scan time or scan pattern of the beam.

<Method of producing grain-oriented electrical steel sheet>

Further, using the method of surface processing of a metal material described above, when the metal material is a grain-oriented electrical steel sheet, it is possible to introduce one or both of a plurality of heat-affected zones and a plurality of thermal strain zones into a surface of the grain-oriented electrical steel sheet by irradiating the surface in a direction intersecting the rolling direction with the energy beam a plurality of times at intervals along the steel sheet rolling direction.

Hereinafter, the "heat-affected zone" introduced to a surface of metal material or a metal sheet (including a steel sheet) refers to a region where physical changes such as melting and solidification due to thermal energy are observed. On the other hand, the "thermal strain zone" introduced to metal material or a metal sheet (including a steel sheet) refers to a region where magnetic properties have changed due to energy introduction, although no physical changes such as melting and solidification are observed.

<Method of surface processing of metal sheet>

When surface processing by energy beam irradiation is carried out on a metal sheet that is passed along a production line, the irradiation with the energy beam is also carried out under at least two focus setting values as described above. The at least two focus setting values may be a combination of an initial focus setting value set off-line and one or more focus setting values set as appropriate for the production line speed, as described above. When the production line speed is raised in a plurality of steps, for example, a focus setting value may be optimized at the highest line speed. Alternatively, each focus setting value that is appropriate at the processing interval time $\tau 2$ described below for each section of a multi-step production line speed may be investigated in advance, and a weighted average value of these focus setting values weighted by the operating time of each production line speed may be used.

In the method of surface processing a metal sheet that is passed along a production line, it is particularly advantageous that focus settings of the energy beam are as follows. When scanning the energy beam periodically in the direction intersecting the sheet passing direction of the metal sheet to introduce one or both of a plurality of heat-affected zones and a plurality of thermal strain zones parallel to each other with an interval $Lp$ in the sheet passing direction, one or more of at least two focus setting values are preferably changed in steps or continuously according to changes in the processing interval time $\tau 2 = Lp/Vl - Ls/Ve$, determined from the production line speed $Vl$, the interval $Lp$, and the scan speed $Ve$ and the scan range $Ls$ of the energy beam. All of the at least two focus setting values may be changed as the processing interval time changes. Further, the initial focus setting value set off-line may be used at the start of processing, and after processing starts, the focus setting value may be changed according to changes in the processing interval time.

That is, the focus setting is preferably changed by and optimized for changes according to the interval time between beam irradiations (the "processing interval time", which is the time between beam scanning stops and scanning resumes), rather than the scan time or scan speed of the beam, or processing interval.

The following is a specific explanation of the focus adjustment method when the focus setting values are changed according to the processing interval time $\tau 1$ or $\tau 2$ described above.

[Focus adjustment method]

Hereinafter, focus adjustment of the energy beam is carried out by adjusting beam convergence conditions so that the shape of the intensity distribution (energy profile) of the energy beam becomes a desired shape. By adjusting the beam convergence conditions, spot diameter and energy intensity may be adjusted to obtain an energy profile that has a desired shape. The energy profile may be a one-dimensional energy profile obtainable by a slit or edge knife method, or a two-dimensional energy profile obtainable by taking a scan direction from a plurality of axes by either of the above methods. The processing interval time $\tau1$ or $\tau2$ described above is preferred as a basis for focus change, but a single parameter that defines the processing interval time may be used (at least one parameter selected from the group consisting of number of irradiations per unit time fp, production line speed Vl, energy beam scan speed Ve, energy beam scan range Ls, and irradiation interval Lp).

The shape of the desired energy profile during focus adjustment may be determined according to the purpose of the surface processing and know-how. For example, when the surface processing is magnetic domain refining by thermal strain introduction, the energy profile is preferably Gaussian with a small beam halo. When the surface processing is welding, then from the viewpoint of spatter prevention, the energy profile might preferably be ringshaped or with a wide halo. Further, optical elements can also be used to make the energy profile semi-linear, elliptical, or dot-like in shape.

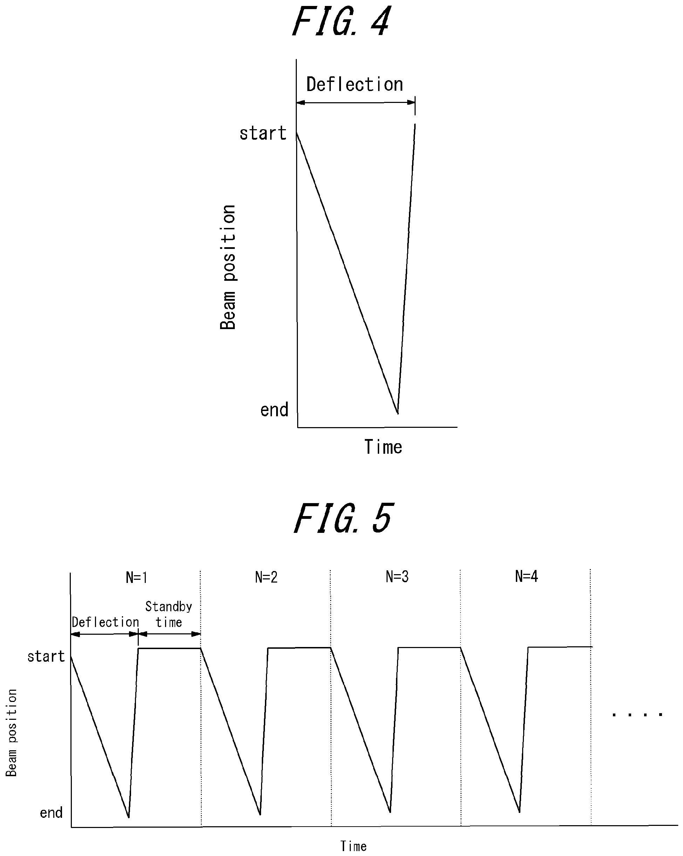

In normal focus adjustment, the beam convergence conditions are adjusted so that the shape of the energy profile obtained by only one scan of the energy beam on the slit or knife edge described above, as illustrated in FIG. 4, is the desired shape. These convergence conditions are maintained to continue beam irradiation. Examples of beam convergence conditions to be adjusted include, but are not limited to, the current values of various control coils for electron beams and the angle and working distance (WD) of condensing mirrors for lasers. Hereinafter, this method of focus adjustment is referred to as off-line adjustment.

In contrast, as a preferred embodiment of focus adjustment according to the present disclosure, it is preferable to repeatedly irradiate with the energy beam at the processing interval time $\tau1$ or $\tau2$ under operating conditions, and to adjust the convergence conditions of the energy beam so that the shape of the energy profile when a steady state is reached (a state in which focus change has reached saturation) becomes a desired shape.

That is, instead of the off-line adjustment pattern described above, irradiation is carried out N times repeatedly at the processing interval time $\tau1$ or $\tau2$ determined by operating conditions, as illustrated in FIG. 5. This irradiation pattern is referred to hereinafter as an N-shot pattern. In the Nth irradiation of this repeated scan-standby pattern, the energy profile is acquired and focus adjustment is carried out. The number of times N for intermittent operation is not particularly specified. Focus changes continuously in ranges where N is small, and therefore the number of times N is preferably set to be after saturation of focus change. The convergence conditions of the energy beam are adjusted so that the shape of the energy profile acquired in the Nth irradiation is optimal. The number of times N at which the focus change reaches saturation may vary depending on apparatus configuration and operating conditions for energy beam irradiation, and therefore the appropriate value of N is selected in consideration of these factors. The selection may be made by a person skilled in the art based on technical knowledge. In this way, focus setting values for various processing interval times are determined in advance and used according to $\tau1$ or $\tau2$ during operation.

Further, it is possible to switch between the focus setting value of off-line adjustment (Condition A) and the focus setting values of a pattern that takes into account the processing interval time (scan standby time) (Condition B) (for example, the methods described under conditions (3) or (4) above). In this configuration, when an energy profile is obtained under Condition A with an N-shot pattern, it is preferable to set the standby time or operating parameter at which the energy intensity when N = N drops to a certain level or lower relative to an intensity when N = 1 as a threshold value for changing irradiation conditions. The threshold value for changing irradiation conditions varies depending on the precision of focus required for processing, and therefore it is necessary to set an appropriate threshold value for each processing content. For example, $\tau1$ or $\tau2$, described above, which cause the focus setting value to change, may be used as the threshold value.

In the configuration described above, for example, when continuous processing is performed under the focus setting value of off-line adjustment (Condition A), the focus setting values in a pattern that takes into account processing time (Condition B) are used under processing conditions where the energy intensity in the saturated state is 80 % or less relative to the first irradiation. Alternatively, the processing interval time $\tau1$ or $\tau2$ is used as the threshold value for changing irradiation conditions, and the initial focus setting value of off-line adjustment (Condition A) is used when $\tau1$ or $\tau2$ is sufficiently long, and under processing conditions where $\tau1$ or $\tau2$ is a certain time or shorter, the switch may be made to the focus setting values set taking $\tau1$ or $\tau2$ into account (Condition B). When $\tau1$ or $\tau2$ is sufficiently long, the difference between the initial state and the saturated state is small, but the shorter the processing interval time $\tau1$ or $\tau2$, the larger the difference between the initial state and the saturated state.

[Metal material (metal sheet)]

According to the present disclosure, any metal material (metal sheet) may be used without any particular restrictions as long as the metal material has a chemical composition, shape, size, and the like applicable to the type of energy beam used in the processing. For example, when processing with a laser, the metal material may have an absorptivity of 20 % or more for the wavelength of the laser used in the processing. In the case of electron beam processing, the metal material may be such that the mean free path of the accelerated electrons does not exceed the sample thickness. A typical example of such metal material (metal sheet) is a grain-oriented electrical steel sheet.

[Grain-oriented electrical steel sheet]

A grain-oriented electrical steel sheet, the metal material most expected to benefit from the application of the present disclosure, is described in detail below.

First, the chemical composition of a slab for a grain-oriented electrical steel sheet is a chemical composition that allows secondary recrystallization. Further, when inhibitors are used, for example, Al and N may be included in appropriate amounts when an AlN inhibitor is used, or Mn and Se and/or S may be included in appropriate amounts when a MnS or MnSe inhibitor is used. Of course, both inhibitors may be used together. In such a case, a preferred content of Al, N, S, and Se is

Al: 0.010 mass% to 0.065 mass%,
N: 0.0050 mass% to 0.0120 mass%,
S: 0.005 mass% to 0.030 mass%, and
Se: 0.005 mass% to 0.030 mass%.

Further, the present disclosure may also be applied to a grain-oriented electrical steel sheet without an inhibitor, with limited Al, N, S, and Se content. In such a case, the preferred content of Al, N, S, and Se is

Al: less than 0.010 mass%,
N: less than 0.0050 mass%,
S: less than 0.0050 mass%, and
Se: less than 0.0050 mass%.

The following is a detailed description of representative basic components and optionally added components applicable to the steel material (slab) for a grain-oriented electrical steel sheet.

C: 0.08 mass% or less

C is added to improve the microstructure of a hot-rolled sheet. However, when C content exceeds 0.08 mass%, decarburization during the production process to 50 mass ppm or lower, where magnetic aging does not occur, becomes difficult. The C content is therefore preferably 0.08 mass% or less. Secondary recrystallization occurs even in steel material that does not contain C, and therefore there is no need to set a specific lower limit for the C content.

Si: 2.0 mass% to 8.0 mass%

Si is an effective element in increasing the electrical resistance of steel and decreasing iron loss. When Si content is less than 2.0 mass%, the improvement effect is not fully realized. On the other hand, when the Si content exceeds 8.0 mass%, workability and sheet passing properties degrade significantly, and magnetic flux density also decreases. The Si content is therefore preferably 2.0 mass% or more. The Si content is therefore preferably 8.0 mass% or less.

Mn: 0.005 mass% to 1.0 mass%

Mn is an element required for improving hot workability, but the sufficient effect is difficult to obtain when content is less than 0.005 mass%. On the other hand, magnetic flux density degrades when the content exceeds 1.0 mass%. The Mn content is therefore preferably 0.005 mass% or more. The Mn content is therefore preferably 1.0 mass% or less.

In addition to the above basic components, at least one of the following optionally added components, which are known to be effective in improving magnetic properties, may be contained as appropriate:

Ni: 0.03 mass% to 1.50 mass%,

Sn: 0.01 mass% to 1.50 mass%,
Sb: 0.005 mass% to 1.50 mass%,
Cu: 0.03 mass% to 3.0 mass%,
P: 0.03 mass% to 0.50 mass%,
Mo: 0.005 mass% to 0.10 mass%, and
Cr: 0.03 mass% to 1.50 mass%.

Ni is an effective element for improving hot-rolled sheet microstructure and improving magnetic properties. However, when Ni content is less than 0.03 mass%, the magnetic property improving effect is low. When the Ni content is more than 1.50 mass%, secondary recrystallization is unstable, and magnetic properties degrade. The Ni content is therefore preferably 0.03 mass% or more. The Ni content is therefore preferably 1.50 mass% or less.

Further, Sn, Sb, Cu, P, Mo, and Cr are also elements that improve magnetic properties, but their effects are not sufficient when content is less than the lower limit described above. When the content exceeds the upper limit described above, growth of secondary recrystallized grains is inhibited and magnetic properties degrade. Therefore, the content ranges described above are preferred.

Other than the above components, the balance consists of Fe and inevitable impurity.

After hot rolling of the steel material (slab) for a grain-oriented electrical steel sheet that has the chemical composition described above, hot-rolled sheet annealing is optionally carried out. The hot-rolled sheet is then subjected to cold rolling once, or twice or more with intermediate annealing in between, and finished into a steel strip having a final sheet thickness. The steel strip is then subjected to decarburization annealing, coated with an annealing separator composed mainly of MgO, coiled, and subjected to final annealing for the purpose of secondary recrystallization and formation of a forsterite film. After the final annealing, the steel strip is subjected to flattening annealing, and a magnesium phosphate tension film is formed on the steel strip to obtain a product sheet steel strip.

According to the present disclosure, processing after flattening annealing includes a magnetic domain refining process in which thermal strain is introduced to a surface of the grain-oriented electrical steel sheet (steel strip) by energy beam irradiation. In non-heat-resistant magnetic domain refining that introduces thermal strain, energy beam irradiation is preferably carried out after tension film formation. When carried out before tension film formation, the introduced thermal strain would be released by baking when the tension film is formed, and the magnetic domain refining effect would not be obtained.

When heat-resistant magnetic domain refining by groove processing is carried out as metal surface processing, energy beam irradiation is preferably carried out before tension film formation. When carried out after tension film formation, the tension film that has been formed would be destroyed.

Hereinafter, examples of metal surface processing include hardening, cleaning, resist stripping, local thermal strain introduction, and laser peening. The present disclosure is applicable to any processing method that scans an energy beam a plurality of times over a metal sheet surface.

Of the above processes, the introduction of local thermal strain for magnetic domain refining requires the most precise focus control, and is therefore the process to which application of the present disclosure has the greatest effect. The magnetic domain refining process is described below.

[Beam irradiation conditions]

For non-heat-resistant magnetic domain refining, it is effective to use a laser that has a wavelength from 400 nm to 1200 nm, which has a high absorptivity in metals, or an electron beam that has high transmission capacity.

The following is a more detailed description of preferred electron beam irradiation conditions in implementing the present disclosure.

• Accelerating voltage: 60 kV to 300 kV

A higher accelerating voltage is preferred as it increases the linearity of electrons and decreases thermal effects outside the beam irradiation. For this reason, the accelerating voltage is preferably 60 kV or more. The accelerating voltage is more preferably 90 kV or more. The accelerating voltage is even more preferably 120 kV or more.

On the other hand, when the accelerating voltage is set too high, shielding from X-rays generated by the electron beam irradiation becomes difficult. Therefore, from a practical viewpoint, the accelerating voltage is preferably 300 kV or less. The accelerating voltage is more preferably 200 kV or less.

• Beam current: 0.5 mA to 40 mA

The beam current is preferably as small as possible from the viewpoint of beam diameter. This is because beam diameter tends to expand due to Coulomb repulsion when the beam current is increased. Therefore, according to the present disclosure, the beam diameter is preferably 40 mA or less. On the other hand, when the beam current is too small, the energy to form strain is insufficient, and therefore the beam current is preferably 0.5 mA or more.

• Vacuum in beam irradiation region: $1\times10^{-5}$ Pa or more and 3 Pa or less

The electron beam is scattered by gas molecules, causing an increase in beam diameter and halo diameter, and a decrease in energy. Therefore, the higher the degree of vacuum in the beam irradiation region, the better, and the pressure is preferably 3 Pa or less. A lower limit is not particularly restricted. An excessively low pressure increases the cost of vacuum pumps and other vacuum systems. Accordingly, for practical purposes, the pressure is preferably $1\times10^{-5}$ Pa or more.

The following is a more detailed description of preferred irradiation conditions of a laser in implementing the present disclosure.

• Laser output: 50 W or more and 5000 W or less

When the laser output is low, the laser scan speed needs to be slowed to provide sufficient energy to apply thermal strain. At this time, excessively low speeds result in a degradation of production efficiency. On the other hand, although high output makes it easier to apply thermal strain, high output also increases damage to the laser transport system, which increases maintenance frequency and decreases production efficiency. In view of the above, the output power of the laser is preferably 50 W or more. The output power of the laser is preferably 5000 W or less.

Further, the following irradiation conditions are preferred for both electron beams and lasers.

• Spot diameter: 300 $\mu$m or less

Smaller spot diameters are preferred because they can introduce strain locally. Therefore, according to the present disclosure, the beam diameter of the energy beam is preferably 300 $\mu$m or less. The beam diameter is more preferably 280 $\mu$m or less. The beam diameter is even more preferably 260 $\mu$m or less. Hereinafter, spot diameter refers to the full width at half maximum of the beam profile acquired by the slit method using a slit of 30 $\mu$m in width.

• Deflection speed: 5 m/s to 400 m/s

The slower the beam deflection speed, the more heat can be injected per unit length of steel sheet, and therefore the slower the better. However, excessively low speeds decrease the processing region per unit time, resulting in lower production efficiency. The deflection speed is therefore preferably 5 m/s or more. Excessively high speed also requires a larger power supply capacity to provide the heat input necessary to melt steel sheets, resulting in larger apparatus. The deflection speed is therefore preferably 400 m/s or less.

• Angle between thermal strain introduction direction and transverse direction: $\pm30°$ or less

The more the extension direction of the thermal strain introduction zone is angled away from the sheet transverse direction, the more the magnetic poles at the interface between the closure domain and the main magnetic domain decrease, which degrades the magnetic domain refining effect. Therefore, the angle between the extension direction of the thermal strain introduction zone and the sheet transverse direction is preferably $\pm30°$ or less.

The present disclosure is described in detail below, based on examples. The following examples are merely preferred examples of the present disclosure, and the present disclosure is not limited in any way by these examples. It is also possible to implement the present disclosure by making modifications without departing from the scope and sprit of the disclosure, and such modifications are also encompassed by the technical scope of the disclosure.

[Examples 1]

A 300 mm wide cold-rolled steel strip for a grain-oriented electrical steel sheet was produced by a typical production process using a steel slab that had a chemical composition consisting of the alloy content listed in Table 2 with the balance being Fe and inevitable impurity. A resist coating having a thickness of 2 $\mu$m was applied to the entire surface of one side of the cold-rolled steel strip, then the resist was removed by laser irradiation. The concept of sheet passing speed for the examples is illustrated in FIG. 1. As illustrated in FIG. 1, the production line speed Vl was increased from 10 m/min to 140 m/min by repeated acceleration at regular intervals. The laser focus setting values were determined under the five conditions listed in Table 3. Further, various combinations of Lp, the interval between beam irradiation along the steel sheet passing direction, and Ve, the beam scanning speed, were used to vary the processing interval time $\tau 2$. Laser beam profile measurements were made using the slit method with a width of 30 $\mu$m, and the current value of each focusing coil was adjusted so that the beam profile shape was Gaussian.

[Table 2]

Table 2

| Chemical composition (mass%) | | | | | | | |
|---|---|---|---|---|---|---|---|
| C | Si | Mn | Ni | Al | N | Se | S |
| 0.06 | 3.6 | 0.3 | 0.01 | 0.0170 | 0.006 | 0.0100 | 0.0015 |

[Table 3]

Table 3

| Condition | Focus and processing conditions | Output |
|---|---|---|
| (a) | The initial focus setting value adjusted off-line was continuously used for the entire section, independent of the production line speed. | Defined |
| (b) | The initial focus setting value adjusted off-line was continuously used for all sections regardless of the production line speed, and the laser power was increased in production line sections where processing precision degraded. | Variable |
| (c) | The processing interval time $\tau 2$ was calculated with respect to the production line speed, the initial focus setting value adjusted off-line was used when $\tau 2$ was more than 4 ms, and the focus setting values adjusted for the highest line speed were used when for $\tau 2$ was 4 ms or less. | Defined |
| (d) | The processing interval time $\tau 2$ was calculated with respect to the production line speed, the initial focus setting value adjusted off-line was used when $\tau 2$ was more than 4 ms, and the weighted average of previously obtained focus setting values adjusted at each production line speed weighted by the operating time at each production line speed were used when $\tau 2$ was 4 ms or less. | Defined |
| (e) | At the start of processing, the initial focus setting value adjusted off-line was used. After the start of processing, optimized focus setting values were used according to changes in the processing interval time $\tau 2$ during operation. | Defined |

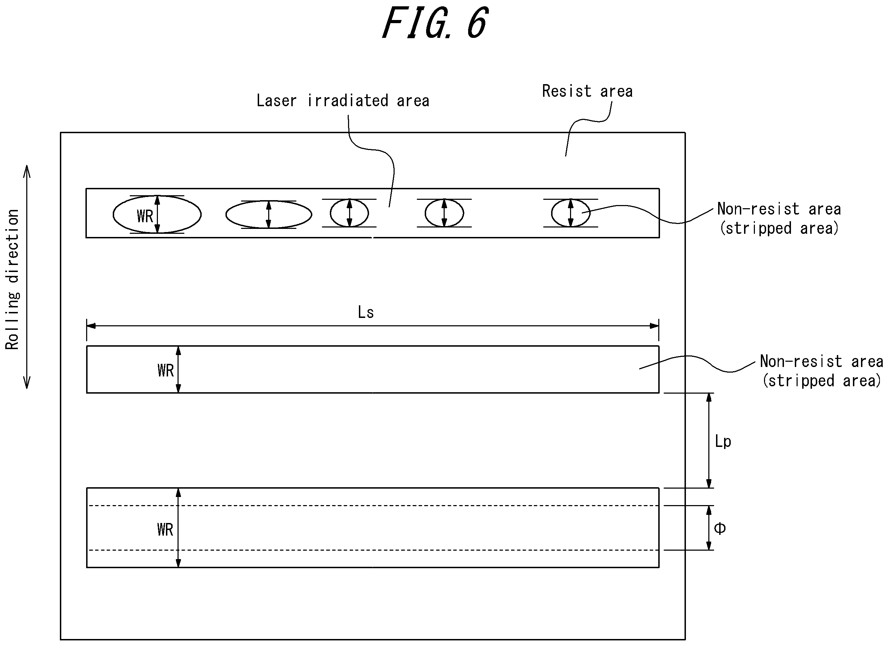

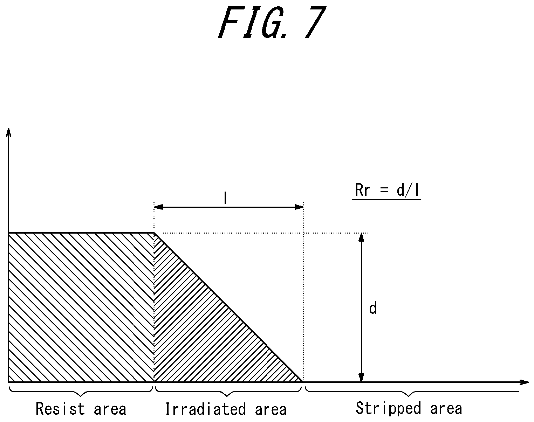

The stripped states of the resist of the steel strips thus obtained were observed using a laser microscope, and the area fraction Rs of the stripped area per area of the laser irradiation, the width WR of the stripped area, and the rectangularity Rr of the stripped area were specifically evaluated as follows, following the procedures illustrated in FIG. 6 and FIG. 7.

The area fraction Rs of the stripped area was evaluated as illustrated in FIG. 6, defined by $Rs = A/(\Phi*Ls)$ (in this expression, * means the multiplication sign), using the laser spot diameter $\Phi$, the scan range Ls, and the area A of the stripped area calculated with a laser microscope. The closer the value of Rs to 1.0, the more the heat-affected zone and the stripped area coincide, that is, the better the stripping of the resist by the laser.

As illustrated in FIG. 6, the stripped area width WR was calculated by measuring the length of the exposed portion of the steel substrate in the direction orthogonal to the scanning direction (in the rolling direction) in the stripped area within the scanned range at 10 points along the sheet transverse direction, and taking the average value. The closer the value of WR is to the spot diameter $\Phi$, the better the stripping of the resist by the laser.

The rectangularity Rr was evaluated by calculating the slope of the stripped area ($Rr = d/l$) from the resist thickness d and irradiation length l in the surface profile of the steel sheet, as illustrated in FIG. 7. The greater the value of Rr, the steeper the stripped edge of the resist, which means that the resist has better resistance in subsequent processing.

The evaluation results are listed in Table 4. It can be seen that by processing under Conditions (c), (d), and (e), which satisfy the requirements of the present disclosure, precise processing can be carried out regardless of the processing interval time.

[Table 4]

Table 4

| No. | Conditions | Vl [m/min] | Lp [mm] | Ve [m/s] | Ls [mm] | τ2 [ms] | Φ [mm] | A [mm²] | d [μm] | l [μm] | Rs [-] | WR [mm] | Rr [-] | Remarks |
|---|---|---|---|---|---|---|---|---|---|---|---|---|---|---|
| 1 | (a) | 100 | 4 | 40 | 300 | -5.1 | 0.1 | 0.0 | 2.0 | No stripping | - | - | - | Comparative Example |
| 2 | (a) | 120 | 4 | 100 | 300 | -1.0 | 0.1 | 0.0 | 2.0 | No stripping | - | - | - | Comparative Example |
| 3 | (a) | 80 | 4 | 100 | 300 | 0.0 | 0.1 | 0.0 | 2.0 | No stripping | - | - | - | Comparative Example |
| 4 | (a) | 60 | 4 | 100 | 300 | 1.0 | 0.1 | 0.0 | 2.0 | No stripping | - | - | - | Comparative Example |
| 5 | (a) | 140 | 8 | 200 | 300 | 1.9 | 0.1 | 0.0 | 2.0 | No stripping | - | - | - | Comparative Example |
| 6 | (a) | 80 | 8 | 100 | 300 | 3.0 | 0.1 | 3.0 | 2.0 | 40.0 | 0.1 | 0.02 | 0.05 | Comparative Example |
| 7 | (a) | 60 | 8 | 100 | 300 | 5.0 | 0.1 | 10.0 | 2.0 | 40.0 | 0.3 | 0.04 | 0.05 | Comparative Example |
| 8 | (a) | 20 | 4 | 200 | 300 | 10.5 | 0.1 | 25.0 | 2.0 | 30.0 | 0.8 | 0.06 | 0.07 | Comparative Example |
| 9 | (a) | 10 | 4 | 100 | 300 | 21.0 | 0.1 | 30.0 | 2.0 | 30.0 | 1.0 | 0.10 | 0.07 | Comparative Example |
| 10 | (a) | 10 | 8 | 40 | 300 | 40.5 | 0.1 | 30.0 | 2.0 | 20.0 | 1.0 | 0.10 | 0.10 | Comparative Example |
| 11 | (b) | 100 | 4 | 40 | 300 | -5.1 | 0.1 | 20.0 | 2.0 | 150.0 | 0.7 | 0.05 | 0.01 | Comparative Example |
| 12 | (b) | 120 | 4 | 100 | 300 | -1.0 | 0.1 | 20.0 | 2.0 | 150.0 | 0.7 | 0.05 | 0.01 | Comparative Example |
| 13 | (b) | 80 | 4 | 100 | 300 | 0.0 | 0.1 | 25.0 | 2.0 | 140.0 | 0.8 | 0.06 | 0.01 | Comparative Example |
| 14 | (b) | 60 | 4 | 100 | 300 | 1.0 | 0.1 | 25.0 | 2.0 | 140.0 | 0.8 | 0.06 | 0.01 | Comparative Example |
| 15 | (b) | 140 | 8 | 200 | 300 | 1.9 | 0.1 | 25.0 | 2.0 | 120.0 | 0.8 | 0.06 | 0.02 | Comparative Example |
| 16 | (b) | 80 | 8 | 100 | 300 | 3.0 | 0.1 | 25.0 | 2.0 | 100.0 | 0.8 | 0.06 | 0.02 | Comparative Example |
| 17 | (b) | 60 | 8 | 100 | 300 | 5.0 | 0.1 | 28.0 | 2.0 | 80.0 | 0.9 | 0.06 | 0.03 | Comparative Example |
| 18 | (b) | 20 | 4 | 200 | 300 | 10.5 | 0.1 | 28.0 | 2.0 | 50.0 | 0.9 | 0.06 | 0.04 | Comparative Example |
| 19 | (b) | 10 | 4 | 100 | 300 | 21.0 | 0.1 | 30.0 | 2.0 | 20.0 | 1.0 | 0.10 | 0.10 | Comparative Example |
| 20 | (b) | 10 | 8 | 40 | 300 | 40.5 | 0.1 | 30.0 | 2.0 | 20.0 | 1.0 | 0.10 | 0.10 | Comparative Example |
| 21 | (c) | 100 | 4 | 40 | 300 | -5.1 | 0.1 | 28.0 | 2.0 | 10.0 | 0.9 | 0.06 | 0.20 | Example |
| 22 | (c) | 120 | 4 | 100 | 300 | -1.0 | 0.1 | 28.0 | 2.0 | 5.0 | 0.9 | 0.06 | 0.40 | Example |
| 23 | (c) | 80 | 4 | 100 | 300 | 0.0 | 0.1 | 28.0 | 2.0 | 4.0 | 0.9 | 0.06 | 0.50 | Example |
| 24 | (c) | 60 | 4 | 100 | 300 | 1.0 | 0.1 | 29.0 | 2.0 | 3.0 | 1.0 | 0.06 | 0.67 | Example |
| 25 | (c) | 140 | 8 | 200 | 300 | 1.9 | 0.1 | 29.0 | 2.0 | 2.0 | 1.0 | 0.06 | 1.00 | Example |

| No. | Conditions | Vl [m/min] | Lp [mm] | Ve [m/s] | Ls [mm] | $\tau2$ [ms] | Φ [mm] | A [mm$^2$] | d [μm] | l [μm] | Rs [-] | WR [mm] | Rr [-] | Remarks |
|-----|-----------|-----------|---------|----------|---------|--------------|--------|-----------|--------|--------|--------|---------|--------|---------|
| 26 | (c) | 80 | 8 | 100 | 300 | 3.0 | 0.1 | 30.0 | 2.0 | 1.0 | 1.0 | 0.10 | 2.00 | Example |
| 27 | (c) | 60 | 8 | 100 | 300 | 5.0 | 0.1 | 30.0 | 2.0 | 0.5 | 1.0 | 0.10 | 4.00 | Example |
| 28 | (c) | 20 | 4 | 200 | 300 | 10.5 | 0.1 | 30.0 | 2.0 | 0.5 | 1.0 | 0.10 | 4.00 | Example |
| 29 | (c) | 10 | 4 | 100 | 300 | 21.0 | 0.1 | 30.0 | 2.0 | 0.5 | 1.0 | 0.10 | 4.00 | Example |
| 30 | (c) | 10 | 8 | 40 | 300 | 40.5 | 0.1 | 30.0 | 2.0 | 0.5 | 1.0 | 0.10 | 4.00 | Example |
| 31 | (d) | 100 | 4 | 40 | 300 | -5.1 | 0.1 | 28.0 | 2.0 | 2.0 | 0.9 | 0.06 | 1.00 | Example |
| 32 | (d) | 120 | 4 | 100 | 300 | -1.0 | 0.1 | 28.0 | 2.0 | 2.0 | 0.9 | 0.06 | 1.00 | Example |
| 33 | (d) | 80 | 4 | 100 | 300 | 0.0 | 0.1 | 29.0 | 2.0 | 1.0 | 1.0 | 0.06 | 2.00 | Example |
| 34 | (d) | 60 | 4 | 100 | 300 | 1.0 | 0.1 | 30.0 | 2.0 | 1.0 | 1.0 | 0.10 | 2.00 | Example |
| 35 | (d) | 140 | 8 | 200 | 300 | 1.9 | 0.1 | 30.0 | 2.0 | 0.5 | 1.0 | 0.10 | 4.00 | Example |
| 36 | (d) | 80 | 8 | 100 | 300 | 3.0 | 0.1 | 30.0 | 2.0 | 0.5 | 1.0 | 0.10 | 4.00 | Example |
| 37 | (d) | 60 | 8 | 100 | 300 | 5.0 | 0.1 | 30.0 | 2.0 | 0.3 | 1.0 | 0.10 | 8.00 | Example |
| 38 | (d) | 20 | 4 | 200 | 300 | 10.5 | 0.1 | 30.0 | 2.0 | 0.3 | 1.0 | 0.10 | 8.00 | Example |
| 39 | (d) | 10 | 4 | 100 | 300 | 21.0 | 0.1 | 30.0 | 2.0 | 0.3 | 1.0 | 0.10 | 8.00 | Example |
| 40 | (d) | 10 | 8 | 40 | 300 | 40.5 | 0.1 | 30.0 | 2.0 | 0.3 | 1.0 | 0.10 | 8.00 | Example |
| 41 | (e) | 100 | 4 | 40 | 300 | -5.1 | 0.1 | 30.0 | 2.0 | 0.3 | 1.0 | 0.10 | 8.00 | Example |
| 42 | (e) | 120 | 4 | 100 | 300 | -1.0 | 0.1 | 30.0 | 2.0 | 0.3 | 1.0 | 0.10 | 8.00 | Example |
| 43 | (e) | 80 | 4 | 100 | 300 | 0.0 | 0.1 | 30.0 | 2.0 | 0.3 | 1.0 | 0.10 | 8.00 | Example |
| 44 | (e) | 60 | 4 | 100 | 300 | 1.0 | 0.1 | 30.0 | 2.0 | 0.3 | 1.0 | 0.10 | 8.00 | Example |
| 45 | (e) | 140 | 8 | 200 | 300 | 1.9 | 0.1 | 30.0 | 2.0 | 0.3 | 1.0 | 0.10 | 8.00 | Example |
| 46 | (e) | 80 | 8 | 100 | 300 | 3.0 | 0.1 | 30.0 | 2.0 | 0.3 | 1.0 | 0.10 | 8.00 | Example |
| 47 | (e) | 60 | 8 | 100 | 300 | 5.0 | 0.1 | 30.0 | 2.0 | 0.3 | 1.0 | 0.10 | 8.00 | Example |
| 48 | (e) | 20 | 4 | 200 | 300 | 10.5 | 0.1 | 30.0 | 2.0 | 0.3 | 1.0 | 0.10 | 8.00 | Example |
| 49 | (e) | 10 | 4 | 100 | 300 | 21.0 | 0.1 | 30.0 | 2.0 | 0.3 | 1.0 | 0.10 | 8.00 | Example |
| 50 | (e) | 10 | 8 | 40 | 300 | 40.5 | 0.1 | 30.0 | 2.0 | 0.3 | 1.0 | 0.10 | 8.00 | Example |

[Examples 2]

A 300 mm wide steel strip of a grain-oriented electrical steel sheet produced by a typical production process using a slab that had the chemical composition listed in Table 2 on which an insulating coating was formed after final annealing was irradiated with an electron beam to carry out magnetic domain refining treatment. The concept of sheet passing speed for the examples is illustrated in FIG. 1. As illustrated in FIG. 1, the production line speed VI was increased from 10 m/min to 140 m/min by repeating acceleration at regular intervals.

The electron beam focus setting conditions were carried out under the five conditions listed in Table 3. Further, various combinations of the interval between beam irradiation along the steel sheet passing direction and beam scanning speed were used to vary the processing interval time $\tau 2$. Electron beam profile measurements were made using the slit method, and the current values of the focusing lens and stigmator were adjusted so that the beam profile shape was Gaussian.

From the steel strip thus obtained, angled pieces were cut out to prepare a three-phase stacked iron core model transformer (core weight 50 kg). The iron loss properties were measured at a frequency of 50 Hz when the magnetic flux density in the iron core leg section was 1.7 T. The iron loss property at 1.7 T and 50 Hz was measured using a wattmeter to determine the no-load loss. At the same time, the model transformer was excited in a soundproof room at the maximum magnetic flux density Bm of 1.7 T and the frequency of 50 Hz, and the noise level (dBA) was measured using a sound level meter.

The evaluation results are listed in Table 5. The smaller the iron loss (W/kg) value, the lower the iron loss and the better the iron loss properties. The smaller the noise level (dBA) value, the lower the noise level and the better the noise property. It can be seen that by processing under Conditions (c), (d), and (e), which satisfy the requirements of the present disclosure, precise processing can be carried out regardless of the processing interval time, and low iron loss and low noise are achieved.

[Table 5]

Table 5

| No. | Conditions | VI [m/min] | Lp [mm] | Ve [m/s] | Ls [mm] | $\tau 2$ [ms] | Transformer core loss [W/kg] | Transformer noise [dB] | Remarks |
|---|---|---|---|---|---|---|---|---|---|
| 1 | (a) | 100 | 4 | 40 | 300 | **-5.1** | 0.87 | 30.1 | Comparative Example |
| 2 | (a) | 120 | 4 | 100 | 300 | **-1.0** | 0.87 | 30.3 | Comparative Example |
| 3 | (a) | 80 | 4 | 100 | 300 | **0.0** | 0.86 | 30.3 | Comparative Example |
| 4 | (a) | 60 | 4 | 100 | 300 | **1.0** | 0.83 | 32.4 | Comparative Example |
| 5 | (a) | 140 | 8 | 200 | 300 | **1.9** | 0.83 | 32.4 | Comparative Example |
| 6 | (a) | 80 | 8 | 100 | 300 | **3.0** | 0.80 | 34.1 | Comparative Example |
| 7 | (a) | 60 | 8 | 100 | 300 | **5.0** | 0.79 | 34.7 | Comparative Example |
| 8 | (a) | 20 | 4 | 200 | 300 | **10.5** | 0.78 | 36.4 | Comparative Example |
| 9 | (a) | 10 | 4 | 100 | 300 | **21.0** | 0.76 | 40.9 | Comparative Example |
| 10 | (a) | 10 | 8 | 40 | 300 | **40.5** | 0.75 | 41.2 | Comparative Example |

(continued)

| No. | Conditions | Vl [m/min] | Lp [mm] | Ve [m/s] | Ls [mm] | τ2 [ms] | Transformer core loss [W/kg] | Transformer noise [dB] | Remarks |
|---|---|---|---|---|---|---|---|---|---|
| 11 | (b) | 100 | 4 | 40 | 300 | -5.1 | 0.80 | 43.5 | Comparative Example |
| 12 | (b) | 120 | 4 | 100 | 300 | -1.0 | 0.79 | 42.9 | Comparative Example |
| 13 | (b) | 80 | 4 | 100 | 300 | 0.0 | 0.78 | 42.2 | Comparative Example |
| 14 | (b) | 60 | 4 | 100 | 300 | 1.0 | 0.78 | 42.2 | Comparative Example |
| 15 | (b) | 140 | 8 | 200 | 300 | 1.9 | 0.78 | 42.2 | Comparative Example |
| 16 | (b) | 80 | 8 | 100 | 300 | 3.0 | 0.77 | 41.8 | Comparative Example |
| 17 | (b) | 60 | 8 | 100 | 300 | 5.0 | 0.76 | 41.5 | Comparative Example |
| 18 | (b) | 20 | 4 | 200 | 300 | 10.5 | 0.76 | 41.5 | Comparative Example |
| 19 | (b) | 10 | 4 | 100 | 300 | 21.0 | 0.75 | 41.0 | Comparative Example |
| 20 | (b) | 10 | 8 | 40 | 300 | 40.5 | 0.75 | 41.0 | Comparative Example |
| 21 | (c) | 100 | 4 | 40 | 300 | -5.1 | 0.77 | 38.0 | Example |
| 22 | (c) | 120 | 4 | 100 | 300 | -1.0 | 0.77 | 38.2 | Example |
| 23 | (c) | 80 | 4 | 100 | 300 | 0.0 | 0.76 | 38.5 | Example |
| 24 | (c) | 60 | 4 | 100 | 300 | 1.0 | 0.76 | 39.0 | Example |
| 25 | (c) | 140 | 8 | 200 | 300 | 1.9 | 0.76 | 39.0 | Example |
| 26 | (c) | 80 | 8 | 100 | 300 | 3.0 | 0.76 | 39.4 | Example |
| 27 | (c) | 60 | 8 | 100 | 300 | 5.0 | 0.75 | 39.7 | Example |
| 28 | (c) | 20 | 4 | 200 | 300 | 10.5 | 0.75 | 39.8 | Remarks |
| 29 | (c) | 10 | 4 | 100 | 300 | 21.0 | 0.75 | 40.1 | Example |
| 30 | (c) | 10 | 8 | 40 | 300 | 40.5 | 0.75 | 40.3 | Example |
| 31 | (d) | 100 | 4 | 40 | 300 | -5.1 | 0.76 | 38.6 | Example |
| 32 | (d) | 120 | 4 | 100 | 300 | -1.0 | 0.76 | 38.9 | Example |
| 33 | (d) | 80 | 4 | 100 | 300 | 0.0 | 0.76 | 39.2 | Example |
| 34 | (d) | 60 | 4 | 100 | 300 | 1.0 | 0.76 | 39.6 | Example |
| 35 | (d) | 140 | 8 | 200 | 300 | 1.9 | 0.75 | 39.6 | Example |
| 36 | (d) | 80 | 8 | 100 | 300 | 3.0 | 0.75 | 39.9 | Example |
| 37 | (d) | 60 | 8 | 100 | 300 | 5.0 | 0.75 | 40.1 | Example |
| 38 | (d) | 20 | 4 | 200 | 300 | 10.5 | 0.75 | 40.0 | Example |
| 39 | (d) | 10 | 4 | 100 | 300 | 21.0 | 0.75 | 39.9 | Example |
| 40 | (d) | 10 | 8 | 40 | 300 | 40.5 | 0.75 | 39.9 | Example |
| 41 | (e) | 100 | 4 | 40 | 300 | -5.1 | 0.75 | 40.2 | Example |

(continued)

| No. | Conditions | Vl [m/min] | Lp [mm] | Ve [m/s] | Ls [mm] | $\tau2$ [ms] | Transformer core loss [W/kg] | Transformer noise [dB] | Remarks |
|---|---|---|---|---|---|---|---|---|---|
| 42 | (e) | 120 | 4 | 100 | 300 | -1.0 | 0.75 | 39.9 | Example |
| 43 | (e) | 80 | 4 | 100 | 300 | 0.0 | 0.75 | 39.6 | Example |
| 44 | (e) | 60 | 4 | 100 | 300 | 1.0 | 0.75 | 40.1 | Example |
| 45 | (e) | 140 | 8 | 200 | 300 | 1.9 | 0.75 | 40.1 | Example |
| 46 | (e) | 80 | 8 | 100 | 300 | 3.0 | 0.75 | 39.9 | Example |
| 47 | (e) | 60 | 8 | 100 | 300 | 5.0 | 0.75 | 40.2 | Example |
| 48 | (e) | 20 | 4 | 200 | 300 | 10.5 | 0.75 | 40.3 | Example |
| 49 | (e) | 10 | 4 | 100 | 300 | 21.0 | 0.75 | 39.9 | Example |
| 50 | (e) | 10 | 8 | 40 | 300 | 40.5 | 0.75 | 39.6 | Example |

INDUSTRIAL APPLICABILITY

The present disclosure is applicable to modifying the surface of metal material by irradiation with an energy beam. In particular, the present disclosure is applicable to suppressing degradation of processing precision that occurs when forming heat-affected zones on metal sheets at high speeds, and to suppressing degradation of iron loss properties and noise properties that occurs when introducing thermal strain to grain-oriented electrical steel sheets at high speeds.

**Claims**

1.  A method of surface processing a metal material, comprising: irradiating a surface of the metal material with an energy beam under at least two focus setting values.

2.  The method of surface processing a metal material according to claim 1, wherein at least one of the focus setting values is changed in accordance with a change in a processing interval time $\tau1 = 1/fp - Ls/Ve$, determined from a scan speed Ve, a scan range Ls, and a number of irradiations per unit time fp of the energy beam.

3.  The method of surface processing a metal material according to claim 1 or 2, wherein the metal material is a grain-oriented electrical steel sheet.

4.  A method of producing a grain-oriented electrical steel sheet, comprising: irradiating a surface of the grain-oriented electrical steel sheet in a direction intersecting a rolling direction with an energy beam a plurality of times by the method of surface processing a metal material according to claim 3 to introduce one or both of a plurality of heat-affected zones and a plurality of thermal strain zones to the surface of the grain-oriented electrical steel sheet.

5.  A method of surface processing a metal sheet, comprising: periodically scanning an energy beam on a surface of the metal sheet passing through a production line, in a direction intersecting a sheet passing direction to introduce one or both of a plurality of heat-affected zones and a plurality of thermal strain zones parallel to each other at an interval Lp in the sheet passing direction into the surface, wherein
irradiating with the energy beam is carried out under at least two focus setting values.

6.  The method of surface processing a metal sheet according to claim 5, wherein at least one of the focus setting values is changed in accordance with a change in a processing interval time $\tau2 = Lp/Vl - Ls/Ve$, determined from a production line speed Vl, the interval Lp, and a scan speed Ve and a scan range Ls of the energy beam.

7.  The method of surface processing a metal sheet according to claim 5 or 6, wherein the metal sheet is a grain-oriented electrical steel sheet.

8.  The method of surface processing a metal sheet according to claim 6 or 7, wherein the irradiating with the energy beam is repeated at the processing interval time $\tau 2$ under operating conditions, and a convergence system of the energy beam is adjusted to a condition that the focus setting value of the energy beam is optimal where a steady state is reached.

FIG. 1

## *FIG. 2*

## *FIG. 3*

# FIG. 4

# FIG. 5

# FIG. 6

Resist area

Laser irradiated area

Non-resist area (stripped area)

Non-resist area (stripped area)

WR

WR

WR

Ls

Lp

Φ

Rolling direction

# FIG. 7

## INTERNATIONAL SEARCH REPORT

| International application No. |
|---|
| **PCT/JP2024/001912** |

| A. | CLASSIFICATION OF SUBJECT MATTER |
|---|---|

*B23K 26/356*(2014.01)i; *B23K 15/00*(2006.01)i; *C21D 8/12*(2006.01)i
FI: B23K26/356; C21D8/12 D; B23K15/00 503

According to International Patent Classification (IPC) or to both national classification and IPC

| B. | FIELDS SEARCHED |
|---|---|

Minimum documentation searched (classification system followed by classification symbols)

B23K26/356; B23K15/00; C21D8/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020/158732 A1 (NIPPON STEEL CORPORATION) 06 August 2020 (2020-08-06) paragraphs [0016], [0020]-[0026] | 1, 3-5, 7-8 |
| A | | 2, 6 |
| A | JP 2021-25074 A (NIPPON STEEL CORPORATION) 22 February 2021 (2021-02-22) entire text, all drawings | 1-8 |
| A | JP 2004-56090 A (NIPPON STEEL CORP.) 19 February 2004 (2004-02-19) entire text, all drawings | 1-8 |
| A | JP 2016-78047 A (AMADA HOLDINGS CO., LTD.) 26 May 2016 (2016-05-26) entire text, all drawings | 1-8 |
| A | JP 5-128992 A (KAWASAKI STEEL CORP.) 25 May 1993 (1993-05-25) entire text, all drawings | 1-8 |
| A | WO 2012/014290 A1 (NIPPON STEEL CORP.) 02 February 2012 (2012-02-02) entire text, all drawings | 1-8 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/001912**

| Patent document cited in search report | | | Publication date (day/month/year) | Patent family member(s) | | | Publication date (day/month/year) |
|---|---|---|---|---|---|---|---|
| WO | 2020/158732 | A1 | 06 August 2020 | US 2022/0127692 A1 paragraphs [0031]-[0033], [0043]-[0053] CN 113348257 A | | | |
| JP | 2021-25074 | A | 22 February 2021 | (Family: none) | | | |
| JP | 2004-56090 | A | 19 February 2004 | US 2004/0040629 A1 entire text, all drawings CN 1475583 A | | | |
| JP | 2016-78047 | A | 26 May 2016 | (Family: none) | | | |
| JP | 5-128992 | A | 25 May 1993 | (Family: none) | | | |
| WO | 2012/014290 | A1 | 02 February 2012 | US 2013/0118654 A1 entire text, all drawings CN 103052723 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0622179 B

- JP H07192891 A